# FASCICULE DE BREVET EUROPEEN

(11) **EP 1 727 692 B1**
(45) Date de publication et mention de la délivrance du brevet: **22.09.2010**
(21) Numéro de dépôt: 05739580.8
(22) Date de dépôt: 11.03.2005
(51) Int. Cl.: B60H 1/00

(54) **DISPOSITIF DE CONDITIONNEMENT D'AIR, POUR VEHICULES, AVEC DES ENTREES D'AIR EXTERIEUR ET D'AIR RECYCLE**
MIT EXTERNEN LUFTEINGÄNGEN UND EINER LUFTZIRKULATIONSEINHEIT VERSEHENE KLIMAANLAGE FÜR EIN FAHRZEUG
AIR-CONDITIONING DEVICE FOR VEHICLE PROVIDED WITH EXTERNAL AIR INPUTS AND AIR RECIRCULATING UNIT

(30) Priorité: 15.03.2004 FR 0402632
(43) Date de publication de la demande: 06.12.2006
(73) Titulaire: VALEO SYSTEMES THERMIQUES, 78320 Le Mesnil Saint-Denis (FR); Peugeot Citroën Automobiles SA, 78140 Vélizy-Villacoublay (FR)
(72) Inventeur: CHERIAUX, Olivier, F-28210 NOGENT LE ROI (FR); NAJI, Said, F-78990 ELANCOURT (FR); CARTON, Thomas, F-78310 MAUREPAS (FR); BENASSER, Lakhdar, F-60300 SENLIS (FR)
(74) Mandataire: Balesta, Pierre
(86) Numéro de dépôt international: PCT/FR2005/000583
(87) Numéro de publication internationale: WO 2005/100060

(56) Documents cités:
- EP-A- 0 709 241
- EP-A- 1 369 270
- FR-A- 2 756 911
- FR-A- 2 786 439

## Description

L'invention se rapporte, de manière générale, à un dispositif de conditionnement d'air pour véhicules automobiles.

Elle concerne plus précisément un dispositif de conditionnement de l'air dans un habitacle de véhicule automobile, comportant un appareil de ventilation, chauffage et/ou climatisation installé dans l'habitacle du véhicule, par exemple sous le tableau de bord, et susceptible d'être alimenté en air extérieur prélevé dans un auvent situé au pied du pare-brise et/ou en air de recyclage prélevé dans l'habitacle, ledit dispositif comportant au moins un volet de répartition permettant de régler le ratio entre le débit d'air extérieur prélevé et le débit d'air recyclé. Un tel dispositif est connu du document EP 1369 270 A1, qui constitue l'art antérieur le plus proche.

Dans de nombreux véhicules automobiles, le dispositif de conditionnement de l'air comporte une commande manuelle ou automatique permettant de choisir l'air entrant soumis au conditionnement. Lorsque le véhicule traverse des zones où règnent de mauvaises odeurs ou de la pollution atmosphérique, il est bon de recycler l'air de l'habitacle, pour des questions de confort. Dans certains dispositifs de conditionnement, ce réglage est réalisé automatiquement, par exemple lorsque la différence entre la température de l'air extérieur et la température souhaitée dans l'habitacle est trop importante, lors du démarrage du véhicule.

Actuellement, l'air extérieur est prélevé dans l'auvent situé au pied du pare-brise, sous la partie arrière du capot avant, et l'air recyclé est prélevé par une ouverture ménagée dans la partie supérieure du boîtier de l'appareil de conditionnement situé sous le tableau de bord. Le circuit de l'air extérieur prélevé et le circuit de l'air recyclé en amont du groupe de conditionnement sont donc totalement séparés. Le niveau des bruits perçus par les occupants du véhicule, qui proviennent notamment du bruit généré par le ventilateur de l'appareil, sont fonction du réglage du passage de l'ouverture ménagé dans le boîtier pour l'air recyclé.

Cette disposition entraîne un écart important entre les bruits perçus par les occupants du véhicule et générés par le système de conditionnement, selon le mode de prélèvement d'air de l'appareil, choisi manuellement ou de manière automatique. Le niveau de bruit perçu en mode de prélèvement « air extérieur » est faible, tandis que le niveau de bruit en mode de prélèvement « air recyclé » est élevé. L'écart du bruit perçu par les occupants, lors du changement du mode de prélèvement d'air, crée des nuisances sonores importantes alors que les constructeurs de véhicule recherchent le confort des usagers.

Le volet de répartition est logé dans l'habitacle, dans le conduit d'entrée d'air du ventilateur, près d'une paroi de l'auvent qui sépare l'habitacle de l'enceinte de l'auvent par où transite l'air extérieur prélevé, c'est-à-dire dans une zone déjà encombrée où l'on recherche de plus en plus de place disponible pour loger d'autres systèmes tels que la radio, des appareils de musique et/ou de navigation.

Un premier but de l'invention est de proposer une modification au circuit de l'air recyclé qui permette de diminuer de façon très sensible les nuisances sonores lors du passage entre le mode de fonctionnement en air prélevé à l'extérieur et le mode de fonctionnement en air recyclé.

Un deuxième but de l'invention est de proposer une modification au circuit de l'air recyclé qui permette de gagner de la place sous le tableau de bord, en diminuant le volume de l'appareil de conditionnement.

L'invention atteint le premier but par le fait que l'air recyclé pénètre dans l'auvent par deux orifices de prélèvement d'air recyclé ménagés dans la cloison séparant l'auvent de l'habitacle, lesdits orifices étant susceptibles d'être obturés par des volets de répartition individuels montés dans l'auvent, et en ce que les deux orifices de prélèvement d'air sont disposés de part et d'autre d'un passage d'entrée d'air dans l'appareil, ménagé dans la cloison.

Ainsi le circuit de l'air recyclé se confond en partie avec le circuit de l'air prélevé à l'extérieur et l'orifice de prélèvement d'air recyclé étant éloigné du conduit d'entrée d'air du ventilateur, moins de bruit se propage dans l'habitacle en mode de prélèvement en air recyclé.

De manière avantageuse, l'auvent est équipé d'un filtre traversé par l'air extérieur prélevé et/ou l'air recyclé et situé en amont d'un passage d'entrée d'air dans l'appareil, ménagé dans la cloison de séparation.

Ce filtre favorise ainsi les diminutions du bruit dans le mode de fonctionnement en air recyclé.

Pour diminuer encore les nuisances sonores quel que soit le mode de fonctionnement, l'auvent comporte un dispositif de réduction des nuisances sonores. Ce dispositif comporte avantageusement des chicanes.

L'auvent comporte en outre au moins une entrée d'air extérieure susceptible d'être obturée par un volet de répartition.

Ainsi, les volets de répartition, qui se trouvent actuellement dans la zone supérieure de l'appareil, sont installés dans l'auvent, ce qui permet de réduire le volume général de l'appareil et ainsi de gagner de la place sous le tableau de bord d'autant plus que le boîtier de l'appareil ne comporte plus d'ouverture pour le prélèvement de l'air recyclé, en amont du groupe de ventilation, ni ne nécessite un conduit d'entrée d'air important dans cette zone pour installer le volet de répartition.

D'autres avantages et caractéristiques de l'invention ressortiront à la lecture de la description suivante faite à titre d'exemple et en référence aux dessins annexés dans lesquels :
la figure 1 montre schématiquement un exemple de l'implantation d'un appareil de conditionnement de l'air dans un habitacle de véhicule automobile selon l'état de la technique ;
la figure 2 montre un exemple d'implantation du même appareil sur un véhicule ayant subi des modifications, dans le circuit de prélèvement de l'air extérieur et le circuit de l'air recyclé ; cet exemple ne correspond pas à l'invention revendiquée.
la figure 3 est semblable à la figure 2 et montre une disposition du ventilateur, qui permet un gain de place notable sous le tableau de bord ;
la figure 4 est une première variante du mode d'implantation de l'appareil de la figure 2 ;
la figure 5 montre un deuxième exemple d'implantation ne correspondant
pas à l'invention revendiquée.
la figure 6 montre un troisième exemple d'implantation ne correspondant pas à l'invention revendiquée.
la figure 7 montre une réalisation de l'invention,
la figure 8 est semblable à la figure 5 et montre des chicanes dans l'auvent ; et
la figure 9 est une vue en perspective d'un boîtier d'entrée d'air destiné à être disposé dans l'auvent.

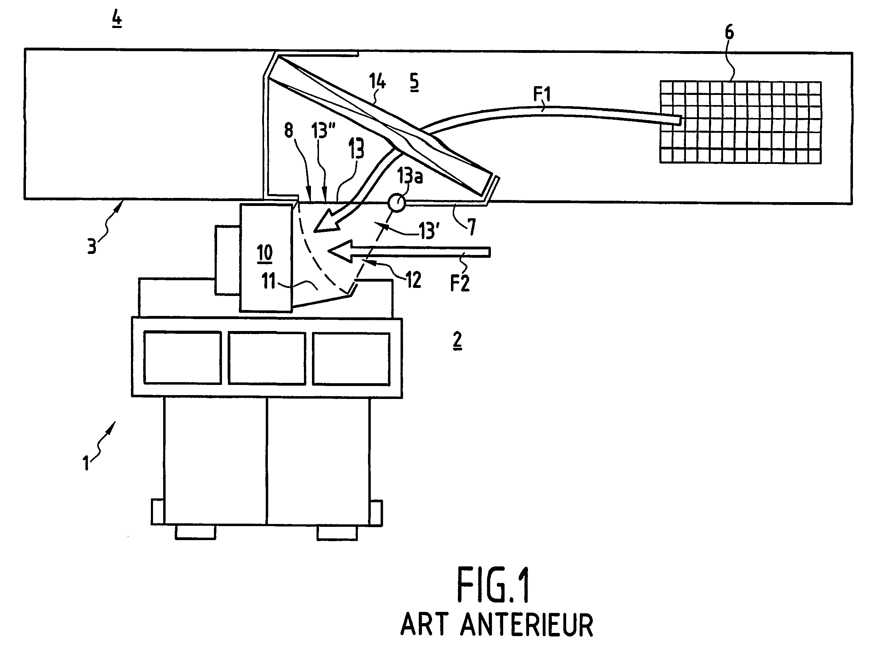

La figure 1 montre la disposition habituelle d'un appareil de conditionnement d'air 1 dans l'habitacle 2 d'un véhicule automobile. Cet appareil de conditionnement 1, peut être un appareil de ventilation, de chauffage et/ou de climatisation.

L'appareil 1 est disposé à l'avant de l'habitacle 2 sous le tableau de bord ou tout autre endroit de l'habitacle susceptible de recevoir un appareil de conditionnement de l'air selon l'invention, et derrière un tablier 3 qui sépare l'habitacle 2, d'un compartiment avant 4, dans lequel loge habituellement le moteur. Le tablier 3 comporte dans sa zone supérieure avant une enceinte appelée auvent 5, réalisé sous la forme d'une gouttière transversale, disposé au pied du pare-brise et recouvert par la partie arrière du capot du compartiment avant, non montré sur le dessin. La référence 6 désigne une grille d'entrée d'air extérieur dans l'auvent 5. La référence 7 désigne la cloison qui sépare l'auvent 5 de l'habitacle 2. Cette cloison 7 fait partie de la caisse du véhicule et peut être solidaire du tableau 3. Un passage 8 est ménagé dans la cloison 7 afin d'alimenter l'appareil 1 en air extérieur.

L'appareil 1 comporte dans sa région supérieure un groupe ventilateur 10 dont le collecteur d'entrée 11, sous forme d'un conduit, reçoit de l'air extérieur par le passage 8. Un orifice 12 ménagé dans le collecteur d'entrée 11 met en communication le conduit avec l'habitacle 2. Un volet de répartition 13, du type drapeau par exemple, monté rotatif autour d'un axe 13a, permet de régler le ratio entre le débit F1 d'air extérieur prélevé et le débit F2 d'air recyclé qui doit être traité par l'appareil 1. Le volet de répartition 13 peut prendre deux positions extrêmes, une première position extrême 13', montrée en pointillé, dans laquelle seul de l'air extérieur est traité, et une deuxième position extrême 13", montrée en trait plein, dans laquelle seul de l'air recyclé est traité par l'appareil 1. La référence 14 désigne un filtre disposé dans l'auvent 5, et qui est traversé seulement par le flux d'air extérieur F1.

On conçoit aisément que, lors du fonctionnement en air recyclé, le bruit du ventilateur 10 se propage dans l'habitacle 2 par l'orifice 12 non obturé par le volet de répartition

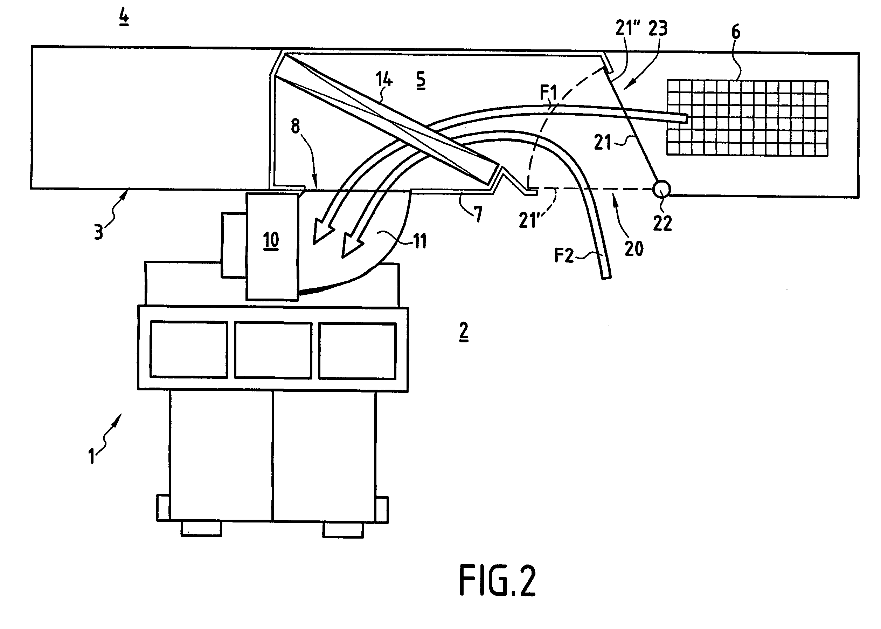

La figure 2 montre des modifications apportées au circuit du flux d'air recyclé F2 pour répondre aux objectifs de réduction des bruits perçus par les occupants du véhicule notamment en mode de fonctionnement en air recyclé ou lors du passage du mode de fonctionnement en air extérieur au mode de fonctionnement en air recyclé.

L'appareil 1 montré sur la figure 2 est identique à l'appareil montré sur la figure 1, si ce n'est que le conduit d'entrée d'air 11 ne comporte pas d'orifice 12, ni de volet de répartition 13. Selon cette variante, qui ne correspond pas à l'invention revendiquée, l'auvent 5 est en communication avec l'habitacle 2 par un orifice de prélèvement 20 d'air recyclé ménagé dans la cloison 7. Cet orifice de prélèvement 20 peut être obturé par un volet de répartition 21 monté pivotant autour d'un axe de rotation 22 dans l'auvent 5. Le volet de répartition 21, qui peut être par exemple un volet de type papillon, peut prendre deux positions extrêmes : une première position extrême 21', montrée en pointillé sur la figure 2, dans laquelle l'orifice de prélèvement 20 est obturé et seul un flux F1 d'air extérieur circule dans l'auvent 5, et une deuxième position extrême 21", dans laquelle le volet de répartition 21 obture l'entrée d'air extérieur 23 dans l'auvent 5 en aval de la grille 6, et seul un flux F2 d'air recyclé circule dans l'auvent 5. Dans ces positions extrêmes, le flux F1 ou le flux F2 traverse le filtre 14 disposé entre l'orifice de prélèvement 20 et le passage 8. Dans une position intermédiaire du volet de répartition 21, les deux flux entrant F1 et F2 se mélangent dans l'auvent 5, traversent le filtre 14 puis sont aspirés par le groupe ventilateur 10.

Les bruits générés par le ventilateur 10 se propagent dans l'auvent 5 et sont amortis par le filtre 14 avant de se propager dans l'habitacle 2 par l'orifice de prélèvement 20, si ce dernier n'est pas obturé par le volet de répartition 21.

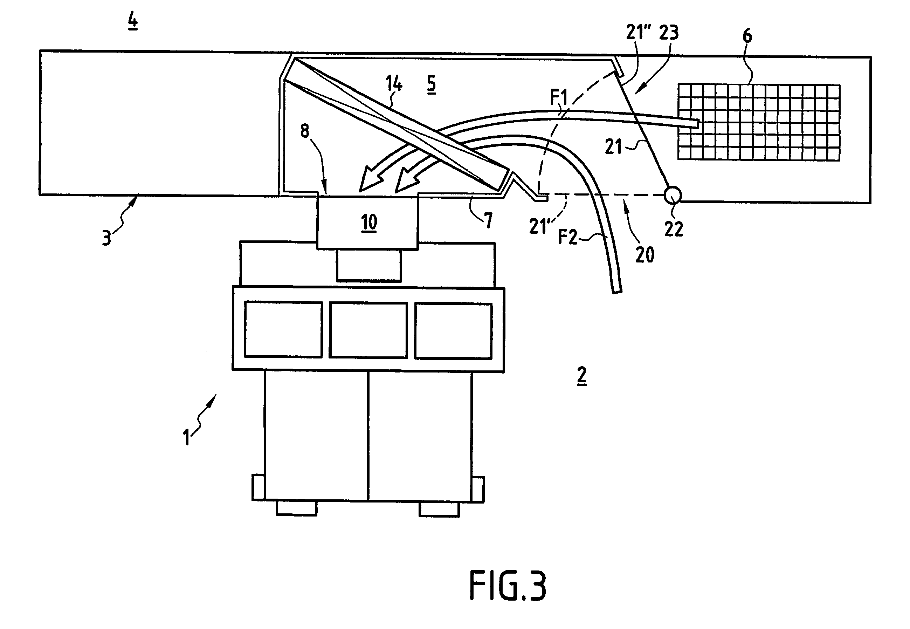

Ainsi que cela est montré sur la figure 3, suivant une variante qui ne correspond pas à l'invention revendiquée, les volets de répartition étant disposés dans l'auvent 5, le conduit 11 peut être supprimé, et le ventilateur 10 peut être disposé à 90° par rapport à la disposition montrée sur la figure 2, ce qui permet avantageusement de diminuer le volume de l'appareil 1.

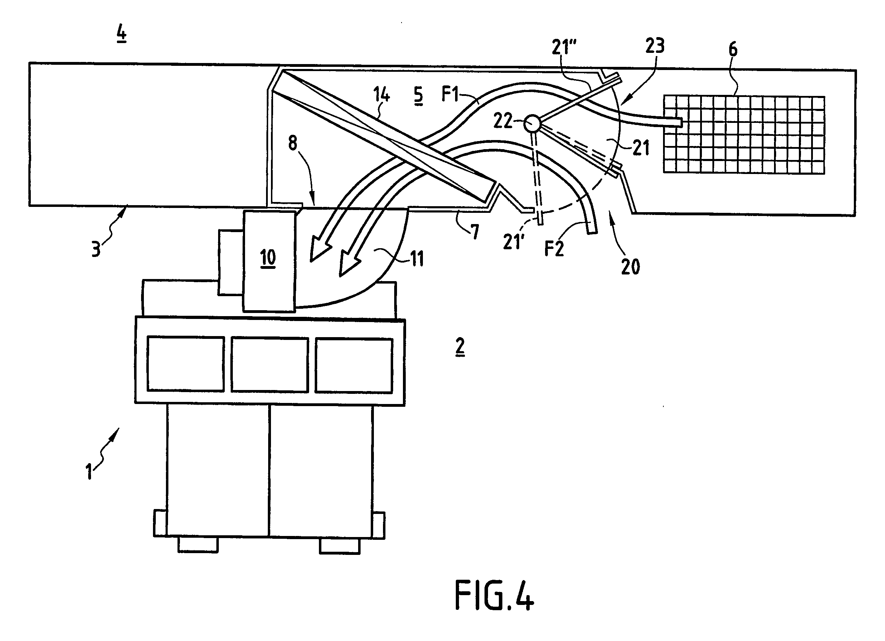

La figure 4 montre une première variante de réalisation qui ne correspond pas à l'invention revendiquée, et qui diffère de celle montrée sur la figure 2 par le fait que le volet de répartition 21 est un volet de type tambour monté pivotant autour d'un axe 22 dans l'auvent 5 afin de permettre le réglage des sections des passages d'air de l'entrée d'air extérieur 23 et de l'orifice de prélèvement d'air recyclé 20. Le ventilateur 10 montré sur cette figure 4 présente un conduit d'entrée d'air 11. Il est manifeste que ce conduit 11 pourrait être supprimé, comme cela est montré sur la figure 3 sans sortir du cadre de la présente invention.

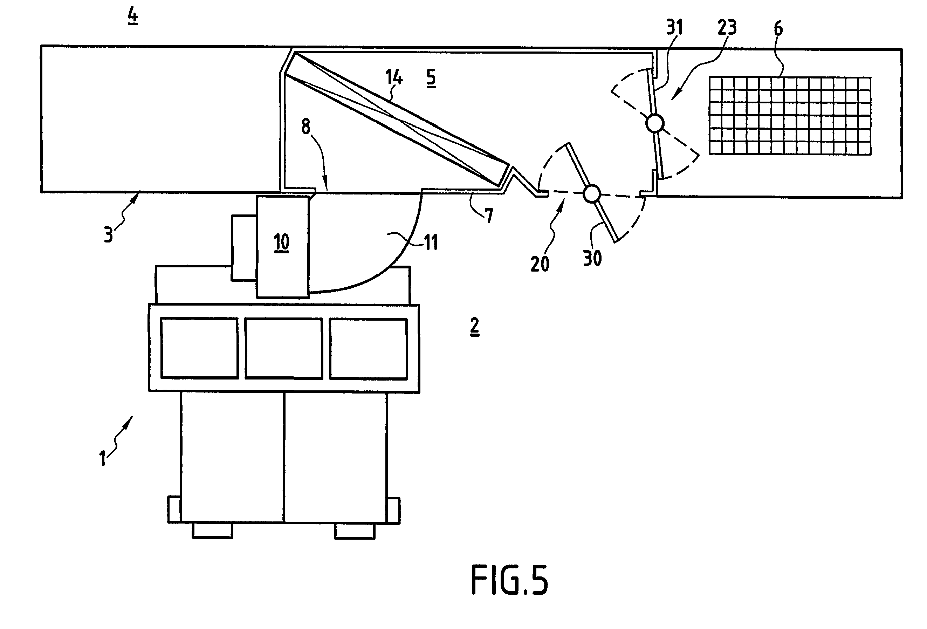

Dans la deuxième variante de réalisation qui ne correspond pas à l'invention revendiquée, montrée sur la figure 5, un premier volet 30, de type papillon, permet d'obturer sélectivement l'orifice d'entrée d'air recyclé 20, et un deuxième volet 31, également de type papillon, permet d'obturer sélectivement l'entrée 23 d'air extérieur. Les volets 30 et 31 peuvent être commandés de manière indépendante par le même organe de commande ou ils peuvent être liés entre eux par un mécanisme de telle manière qu'ils soient entraînés ensemble par le même organe de commande.

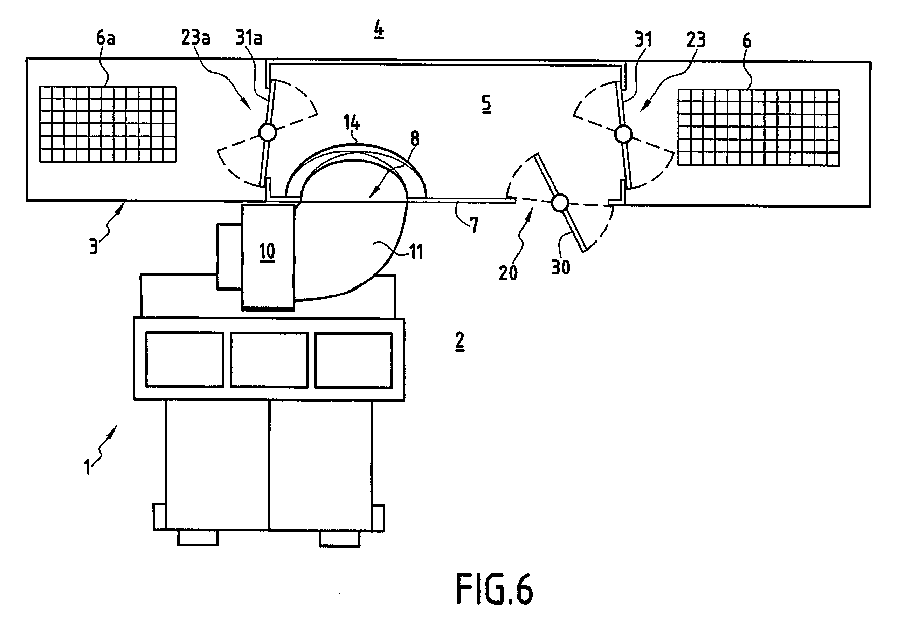

La figure 6 montre une troisième variante de réalisation, qui ne correspond pas à l'invention revendiquée, qui diffère de celle montrée sur la figure 5, par le fait que l'auvent 5 comporte deux entrées d'air extérieur 23 et 23a associées respectivement aux grilles 6 et 6a et équipées de volets papillon 31 et 31a susceptibles d'obturer partiellement ou totalement et à l'unisson les deux entrées d'air extérieur 23 et 23a. Dans ce mode de réalisation, le filtre 14 se présente sous la forme d'une cloche recouvrant le passage 8.

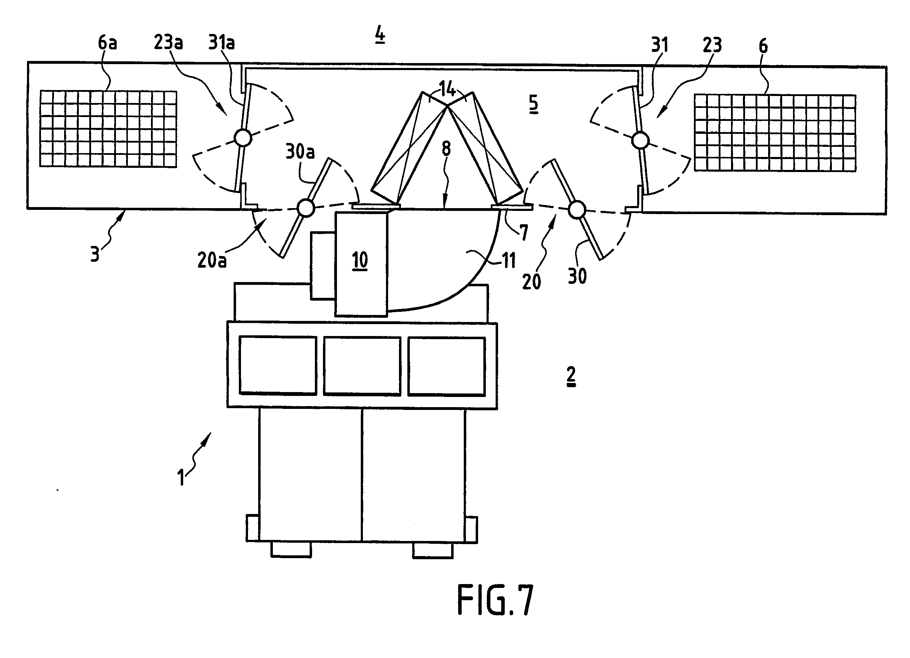

La figure 7 montre une réalisation de l'invention, qui diffère de l'implantation montrée sur la figure 6 par la présence de deux orifices 20 et 20a de prélèvement d'air de recyclage dans la cloison 7 disposés de part et d'autre du passage 8, et équipés de volets 30 et 30a, qui peuvent être reliés respectivement aux volets 31 et 31a par un mécanisme de telle manière qu'ils puissent être entraînés, deux par deux et ensemble, par le même organe de commande. Les volets 30 et 31, d'une part, et les volets 30a et 31a, d'autre part, peuvent également être entraînés de manière indépendante par le même organe de commande.

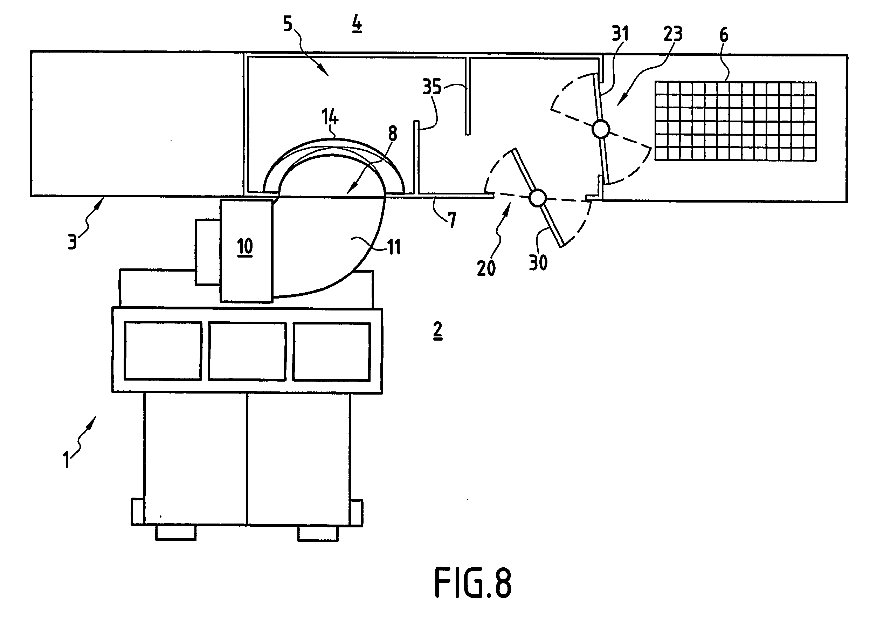

Ainsi que cela est montré sur la figure 8, l'auvent 5 peut être équipé de chicanes 35, disposées transversalement dans le cheminement du flux F1 d'air extérieur et du flux F2 d'air recyclé, en amont du filtre 14, et qui permettent encore d'atténuer les nuisances sonores. Les chicanes 35 sont représentées sur le dessin en amont du filtre 14, mais elles pourraient aussi être placées en aval de ce filtre.

Les différents volets décrits ci-dessus peuvent être de type, papillon, tambour, film ou guillotine sans sortir du cadre de l'invention.

Il a été indiqué ci-dessus que le filtre 14, le ou les volets de répartition et les chicanes 35 sont disposés dans l'auvent 5. Très avantageusement ces éléments sont montés dans un boîtier d'entrée d'air 40, réalisé en matériau plastique, qui est susceptible de loger dans l'enceinte de l'auvent et forment un ensemble unitaire avec le boîtier 40.

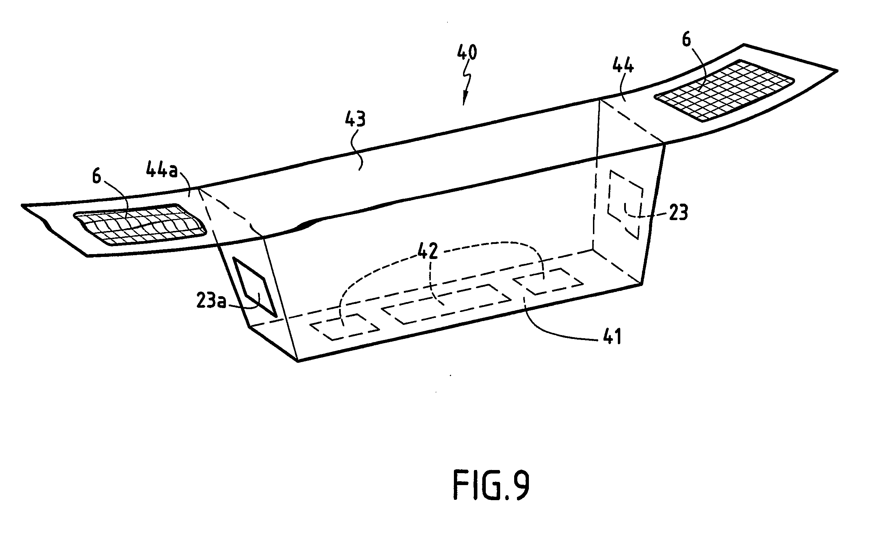

La figure 9 montre un tel boîtier 40 dont les parois latérales présentent les orifices d'entrée d'air extérieur 23 et 23a et dont la paroi inférieure 41 présente des ouvertures 42 en correspondance avec les orifices de prélèvement d'air 20 et 20a et avec le passage 8 ménagés dans la cloison 7. La paroi supérieure 43 du boîtier 40 est prolongée latéralement par des portions de paroi 44 et 44a comportant les grilles extérieures 6 de baie de pare-brise. Les chicanes 35 peuvent être remplacées ou renforcées par un matériau acoustique placé sur la partie intérieure du boîtier d'entrée d'air 40.

## Revendications

1. Dispositif de conditionnement de l'air dans un habitacle (2) de véhicule automobile, comportant un appareil (1) de ventilation, chauffage et/ou climatisation installé dans ledit habitacle et susceptible d'être alimenté en air extérieur (F1) prélevé dans un auvent (5) et/ou en air de recyclage (F2) prélevé dans l'habitacle (2), ledit dispositif comportant au moins un volet de répartition permettant de régler le ratio entre le débit (F1) d'air extérieur prélevé et le débit (F2) d'air recyclé,
**caractérisé par le fait que** l'air recyclé pénètre dans l'auvent (5) par deux orifices de prélèvement (20, 20a) d'air recyclé ménagés dans la cloison (7) séparant l'auvent (5) de l'habitacle (2), lesdits orifices (20, 20a) étant susceptibles d'être obturés par des volets de répartition individuels (30, 30a) montés dans l'auvent (5), et en ce que les deux orifices de prélèvement d'air sont disposés de part et d'autre d'un passage (8) d'entrée d'air dans l'appareil, ménagé dans la cloison (7).

2. Dispositif selon la revendication 1, **caractérisé par le fait que** l'auvent (5) est équipé d'un filtre (14) traversé par l'air extérieur prélevé et/ou l'air recyclé et situé en amont dudit passage (8) d'entrée d'air dans l'appareil (1).

3. Dispositif selon la revendication 2, **caractérisé par le fait que** l'auvent (5) comporte un dispositif de réduction des nuisances sonores.

4. Dispositif selon la revendication 3 **caractérisé par le fait que** le dispositif de réduction des nuisances sonores comporte des chicanes (35).

5. Dispositif selon l'une quelconque des revendications 1 à 4, **caractérisé par le fait que** l'auvent (5) comporte au moins une entrée (23) d'air extérieur susceptible d'être obturée par un volet de répartition (31).

6. Dispositif selon la revendication 5, **caractérisé par le fait que** l'auvent (5) comporte au moins deux entrées (23, 23a) d'air extérieur susceptibles d'être obturées par des volets de répartition individuels (31, 31a).

7. Dispositif selon l'une quelconque des revendications 1 à 6 **caractérisé par le fait que** l'appareil (1) est installé sous le tableau de bord et l'auvent est situé en pied du pare-brise.

8. Dispositif selon l'une quelconque des revendications 1 à 7 **caractérisé par** le fait q'un boîtier d'entrée d'air (40), par lequel transite l'air extérieur et l'air recyclé, est monté dans l'auvent (5) et les volets de répartition sont montés dans ledit boîtier.

## Claims

1. A device for conditioning air in a motor vehicle passenger compartment (2), the device comprising a ventilation, heating, and/or air-conditioning appliance (1) installed in said compartment and suitable for being fed with outside air (F1) taken from a scuttle (5) and/or with recycling air (F2) taken from within the compartment (2), said device including at least one distribution flap for adjusting the ratio between the flow rate (F1) of air taken from the outside and the flow rate (F2) of recycled air,
the device being **characterized by** the fact that the recycled air penetrates into the scuttle (5) via two recycled-air intake orifices (20, 20a) formed in the partition (7) separating the scuttle (5) from the compartment (2), said orifices (20, 20a) being suitable for being closed by individual distribution flaps (30, 30a) mounted in the scuttle (5), and in that the two air-intake orifices are disposed on either side of a passage (8) for admitting air into the appliance, and formed in the partition (7).

2. A device according to claim 1, **characterized by** the fact that the scuttle (5) is fitted with a filter (14) through which air taken from the outside passes and/or through which recycled air passes, the filter being situated upstream from said passage (8) for admitting air into the appliance (1).

3. A device according to claim 2, **characterized by** the fact that the scuttle (5) includes a device for reducing sound nuisance.

4. A device according to claims 3, **characterized by** the fact that the sound nuisance reducing device includes baffles (35).

5. A device according to any one of claims 1 to 4, **characterized by** the fact that the scuttle (5) includes at least one outside air inlet (23) suitable for being closed by a distribution flap (31).

6. A device according to claim 5, **characterized by** the fact that the scuttle (5) includes at least two outside air inlets (23, 23a) suitable for being closed by individual distribution flaps (31, 31a).

7. A device according to any one of claims 1 to 6, **characterized by** the fact that the appliance (1) is installed under the dashboard and the scuttle is situated at the bottom of the windshield.

8. A device according to any one of claims 1 to 7, **characterized by** the fact that the scuttle (5) has mounted therein an air inlet box (40) through which outside air and recycled air passes in transit, and the distribution flaps are mounted in said box.

## Patentansprüche

1. Klimaanlage in einer Fahrgastzelle (2) eines Kraftfahrzeugs, umfassend ein Ventilations-, Heiz- und/oder Klimatisierungsgerät (1), das in der Fahrgastzelle installiert und geeignet ist, mit aus einem Luftschlitz (5) entnommener Außenluft (F1) und/oder mit aus der Fahrgastzelle (2) entnommener Umluft (F2) beaufschlagt zu werden, wobei die Anlage wenigstens eine Verteilerklappe umfaßt, die ermöglicht, das Verhältnis zwischen der Menge (F1) an entnommener Außenluft und der Menge (F2) an Umluft einzustellen,
**dadurch gekennzeichnet, daß** die Umluft über zwei Umluftentnahmeöffnungen (20, 20a), die in der den Luftschlitz (5) von der Fahrgastzelle (2) trennenden Zwischenwand (7) ausgebildet sind, in den Luftschlitz (5) eindringt, wobei die Öffnungen (20, 20a) geeignet sind, durch einzelne Verteilerklappen (30, 30a), die in dem Luftschlitz (5) angebracht sind, verschlossen zu werden, und daß die beiden Luftentnahmeöffnungen auf beiden Seiten eines Durchgangs (8) für den Lufteintritt in das Gerät, der in der Zwischenwand (7) ausgebildet ist, angeordnet sind.

2. Vorrichtung nach Anspruch 1, **dadurch gekennzeichnet, daß** der Luftschlitz (5) mit einem Filter (14) ausgestattet ist, das von der entnommenen Außenluft und/oder von der Umluft durchströmt wird und dem Durchgang (8) für den Lufteintritt in das Gerät (1) vorgeordnet ist.

3. Vorrichtung nach Anspruch 2, **dadurch gekennzeichnet, daß** der Luftschlitz (5) eine Vorrichtung zur Verringerung der Lärmbelästigung umfaßt.

4. Vorrichtung nach Anspruch 3, **dadurch gekennzeichnet, daß** die Vorrichtung zur Verringerung der Lärmbelästigung Ablenkbleche (35) umfaßt.

5. Vorrichtung nach einem der Ansprüche 1 bis 4, **dadurch gekennzeichnet, daß** der Luftschlitz (5) wenigstens einen Außenlufteinlaß (23) aufweist, der geeignet ist, durch eine Verteilerklappe (31) verschlossen zu werden.

6. Vorrichtung nach Anspruch 5, **dadurch gekennzeichnet, daß** der Luftschlitz (5) wenigstens zwei Außenlufteinlässe (23, 23a) umfaßt, die geeignet sind, durch einzelne Verteilerklappen (31, 31a) verschlossen zu werden.

7. Vorrichtung nach einem der Ansprüche 1 bis 6, **dadurch gekennzeichnet, daß** das Gerät (1) unter dem Armaturenbrett angeordnet ist und der Luftschlitz sich am Fuß der Windschutzscheibe befindet.

8. Vorrichtung nach einem der Ansprüche 1 bis 7, **dadurch gekennzeichnet, daß** ein Lufteintrittsgehäuse (40), durch das die Außenluft und die Umluft hindurch strömt, in dem Luftschlitz (5) angebracht ist und die Verteilerklappen in dem Gehäuse angeordnet sind.
